# EUROPÄISCHE PATENTANMELDUNG

(11) **EP 2 682 243 A1**
(43) Veröffentlichungstag der Anmeldung: **08.01.2014**
(21) Anmeldenummer: 12004961.4
(22) Anmeldetag: 04.07.2012
(51) Int. Cl.: B29B 13/02, B29C 49/68

(54) **Vorrichtung zur Herstellung von Hohlkörpen und Verfahren zur Herstellung der Hohlkörper**

(71) Anmelder: Value & Intellectual Properties Management GmbH, 83052 Bruckmühl (DE)
(72) Erfinder: Wirth, Rolf, 83052 Bruckmühl (DE)
(74) Vertreter: Ricker, Mathias

(57) **Zusammenfassung**

Vorrichtung zum Erwärmen von Kunststoff, vorzugsweise PET, wobei der Kunststoff in Form eines Vorformlings vorliegt, der eine Längsachse aufweist, und aus dem ein Hohlkörper, vorzugsweise eine Flasche, hergestellt werden kann, insbesondere durch Streckblasen, mindestens aufweisend:
(a) ein Gehäuse, welches eine Innenwand aufweist, die so ausgebildet ist, dass sie IR-Strahlung reflektieren kann; und
(b) mehrere im Gehäuse angeordnete Heizstrahler zum Bestrahlen des Vorformlings mit IR-Strahlung, vorzugsweise NIR-Strahlung, wobei die Heizstrahler so im Gehäuse angeordnet sind, dass sich der Vorformling in Richtung der Längsachse durch die Heizstrahler abschnittsweise erwärmen lässt,

dadurch gekennzeichnet, dass
(c) mindestens ein Heizstrahler zwischen der Innenwand und dem Vorformling angeordnet ist und von der Innenwand beabstandet ist; und
(d) die Innenwand des Gehäuses den Vorformling um dessen Längsachse herum umschließt.

## Beschreibung

Die vorliegende Erfindung betrifft eine Vorrichtung zum Erwärmen von Kunststoff, vorzugsweise von Polyethylenterephthalat (PET), aus welchem ein Hohlkörper hergestellt werden kann, beispielsweise eine Flasche, insbesondere durch Streckblasen, ein Verfahren zur Herstellung eines Hohlkörpers aus Kunststoff unter Verwendung der Vorrichtung sowie einen Apparat zur Herstellung von Hohlkörpern aus Kunststoff, wobei die Vorrichtung im Apparat verwendet wird.

Die Herstellung von Hohlkörpern aus PET, wie beispielsweise von Flaschen aus PET, vorzugsweise Getränkeflaschen, erfolgt im Allgemeinen in einem mehrstufigen Verfahren. Zunächst werden durch Spritzgießen aus einer PET-Masse Vorformlinge, die sogenannten Preforms, hergestellt. In weiteren Arbeitsgängen werden diese Vorformlinge in einer relativ kurzen Zeitspanne auf eine Verstrecktemperatur von etwa 110 °C erwärmt und schließlich im erwärmten Zustand einer Streckblasform zugeführt. In der Streckblasform wird unter Zuführung von Druckluft ins Innere des Vorformlings die Flasche ausgeformt, wobei der Vorformling in Richtung seiner Längsachse und seiner Querachse gestreckt wird.

Aus der DE 100 58 950 B4 ist bekannt, zur Durchwärmung von PET-Vorformlingen Erwärmungstrecken einzusetzen, die mit Infrarotstrahlen ausgerüstet sind und von den Vorformlingen zur Erwärmung durchlaufen werden. Zur Erwärmung werden langgestreckte Halogenlampen verwendet, welche eine Strahlungscharakteristik aufweisen, die einen wesentlichen Wirkanteil im Bereich des nahen Infrarot (NIR) hat.

DE 10 2006 015 853 A1 betrifft ein Verfahren zur Erwärmung von Kunststoffen und anderen Materialien mit ähnlichen absorbierenden, reflektierenden und transmittierenden Eigenschaften zur gezielten energetischen Verarbeitung von elektromagnetischer Emission, Transmission und Reflektion, welches dadurch gekennzeichnet ist, dass wenigstens zwei Strahler auf Basis ein und derselben Funktionalkeramik mit einem selektiven Infrarot eingesetzt werden, deren Emissionsspektren mit den Absorptionsspektren der zu erwärmenden Materialien weitestgehend übereinstimmen.

WO 2011/066885 A2 betrifft einen Ofen zum Konditionieren von Vorformlingen mit einem Heizrad, an dem mehrere Heizkammern zum Erwärmen je eines Vorformlings angeordnet sind. Die Wände der Heizkammern weisen eine in eine keramische Schicht eingebettete Heizwendel auf, und die der Ausnehmung zum Einführen der Vorformlinge gegenüberliegende Bodenwand der Heizkammern und die daran angrenzende Seitenwand umfassen eine Isolationsschicht, um die Heizkammern der Heizmodule thermisch zu isolieren.

Eine Aufgabe der Erfindung ist es, eine Vorrichtung zum Erwärmen von Kunststoff, vorzugsweise von PET, zur Verfügung zu stellen, wobei der Kunststoff in Form eines Vorformlings vorliegt, und aus welchem ein Hohlkörper, vorzugsweise eine Flasche, hergestellt werden kann, insbesondere durch Streckblasen, welche ein Verfahren zur Herstellung derartiger Hohlkörper erlaubt, welches verkürzte Maschinenzykluszeiten bei hoher Energieeffizienz aufweist.

Diese Aufgabe wird gelöst mit einer Vorrichtung wie in Anspruch 1 definiert. Vorteilhafte Ausführungsformen sind in den von Anspruch 1 abhängigen Ansprüchen definiert.

### Erster Aspekt der Erfindung

Gemäß eines ***ersten Aspekts*** betrifft die Erfindung eine Vorrichtung zum Erwärmen von Kunststoff, vorzugsweise PET, wobei der Kunststoff in Form eines Vorformlings vorliegt, der eine Längsachse aufweist, und aus dem ein Hohlkörper hergestellt werden kann, vorzugsweise eine Flasche, insbesondere durch Streckblasen, mindestens aufweisend:
(a) ein Gehäuse, welches eine Innenwand aufweist, die so ausgebildet ist, dass sie IR-Strahlung reflektieren kann; und
(b) mehrere im Gehäuse angeordnete Heizstrahler zum Bestrahlen des Vorformlings mit IR-Strahlung, vorzugsweise NIR-Strahlung, wobei die Heizstrahler so im Gehäuse angeordnet sind, dass sich der Vorformling in Richtung der Längsachse durch die Heizstrahler abschnittsweise erwärmen lässt,
   dadurch gekennzeichnet, dass
(c) mindestens ein Heizstrahler zwischen der Innenwand und dem Vorformling angeordnet ist und von der Innenwand beabstandet ist; und
(d) die Innenwand den Vorformling um dessen Längsachse herum umschließt.

Die Kombination der Merkmale (a) und (b) mit insbesondere den Merkmalen (c) und (d) gewährleistet eine Vorrichtung, mit der sich ein Vorformling energieeffizient in einen Hohlkörper, vorzugsweise eine Flasche, überführen lässt, vorzugsweise durch Streckblasen. Dabei können die erwärmten Vorformlinge vorteilhaft in kurzen Taktzeiten der Streckblasform zugeführt werden.

Der Begriff "*Vorrichtung zum Erwärmen von Kunststoff*" wie in dieser Offenbarung verwendet, bedeutet eine Vorrichtung, in der ein Kunststoff mit Hilfe von Infrarotstrahlung (IR-Strahlung) erwärmt und verformt werden kann. Der Kunststoff liegt vorzugsweise in Form eines Vorformling vor, aus dem durch Erwärmen und Streckblasen ein Hohlkörper hergestellt werden kann.

Der Begriff "*Kunststoff*" wie in dieser Offenbarung verwendet, umfasst jegliches thermoplastische organische Polymer, welches sich beim Erwärmen durch mechanische Einwirkung verformen lässt.

Polymere, welche sich mit der erfindungsgemäßen Vorrichtung in Hohlkörper überführen lassen sind vorzugsweise Polycarbonate, Polyolefine, Polyvinylchlorid oder Polyester.

Polyester sind vorzugsweise aromatische Polyester, also Polyester, welche durch Veresterung von aromatischen mehrwertigen Carbonsäuren mit mehrwertigen Alkoholen hergestellt werden können. Vorzugsweise sind die aromatischen Carbonsäuren ausgewählt aus Terephthalsäure, 1,4-Naphthalindicarbonsäure und/oder Isophthalsäure. Die Alkoholkomponente ist vorzugsweise ausgewählt aus Ethylenglykol oder Butylenglykol. Ein bevorzugter Polyester ist das bekannte Polyethylenterephthalat (PET).

Vorzugsweise wird die erfindungsgemäße Vorrichtung zur Erwärmung von Polyestern verwendet, vorzugsweise von PET oder von Kunststoffen, welche PET enthalten.

Der Begriff *"Vorformling"* wie in dieser Offenbarung verwendet, bedeutet einen Körper, welcher Kunststoff ausweist oder welcher aus Kunststoff besteht, aus welchem durch Verformen ein Hohlkörper gebildet werden kann. Synonym wird auch der Begriff "*Preform*" in dieser Offenbarung verwendet.

Vorzugsweise ist der Körper so ausgestaltet, dass er eine Längsachse aufweist. Vorzugsweise findet sich diese Längsachse im Hohlkörper nach der Verformung des Vorformlings wieder. Sie erstreckt sich dann i.A. durch den im Hohlkörper enthaltenen Hohlraum.

Der Begriff "*Hohlkörper*" umfasst jeglichen Körper, welcher eine Hohlraum aufweist. Synonym wird auch der Begriff "*Behälter*" verwendet. Vorzugsweise sind die Hohlkörper oder Behälter flaschenförmig ausgestaltet. Mit der erfindungsgemäßen Vorrichtung sind jedoch auch Hohlkörper herstellbar, welche von der Flaschenform abweichen.

Der Begriff "*Streckblasen*" bedeutet ein Verfahren zur Herstellung von Hohlkörpern aus thermoplastischen Kunststoff, bei welchem ein Hohlkörper aus einem Vorformling hergestellt wird, welcher in zwei Richtungen verformt wird, nämlich in Richtung seiner Längsachse und i.A. auch in Richtung einer Achse, welche quer, vorzugsweise senkrecht zur Längsachse verläuft. Dies bedeutet, dass beim Streckblasen der Vorformling in Längsrichtung gestreckt wird, wobei auch sein Umfang in Richtung der Querachse zunimmt.

Die erfindungsgemäße Vorrichtung weist (a) ein Gehäuse auf, welches eine Innenwand oder eine Oberfläche einer Innenwand aufweist, die so ausgebildet ist, dass sie IR-Strahlung reflektieren kann; und (b) mehrere im Gehäuse angeordnete Heizstrahler zum Bestrahlen des Vorformlings mit IR-Strahlung, wobei die Heizstrahler so im Gehäuse angeordnet sind, dass sich der Vorformling in Richtung seiner Längsachse abschnittsweise erwärmen lässt,

Der Begriff "Gehäuse" bedeutet eine feste Hülle, innerhalb derer der Vorformling angeordnet ist, um erwärmt zu werden. Das Gehäuse weist eine Innenwand oder eine Oberfläche einer Innenwand auf. Innerhalb des Gehäuses befinden sich mehrere Heizstrahler, mit deren Hilfe der Vorformling erwärmt wird. Vorzugsweise sind die Heizstrahler so im Gehäuse angeordnet und ausgestaltet, dass der Vorformling in Richtung seiner Längsachse abschnittsweise erwärmt werden kann.

Der Begriff *"abschnittsweise"* wie in dieser Offenbarung verwendet bedeutet, dass die Abschnitte des Vorformlings nacheinander oder auch gleichzeitig erwärmt werden können. Diese Abschnitte erstrecken sich vorzugsweise in Richtung der Längsachse des Vorformlings, d.h. die sich im Vorformling erstreckende Längsachse ist in Abschnitte aufgeteilt.

Der Begriff "*Heizstrahler*" bedeutet eine Strahlungsquelle, vorzugsweise eine Heizwendel, wobei der Spektralbereich der abgestrahlten Wärmestrahlung (IR-Strahlung) im Wellenlängenbereich von vorzugsweise 2 bis 3,5 µm liegen kann. Die Verwendung von IR-Strahlung ist deshalb wünschenswert, weil sie in die Wand der Vorformling eindringen kann und deshalb dort für eine wirksame Erwärmung sorgen kann. Somit wird von dieser Strahlung ein großer Anteil der eingestrahlten Wärmestrahlung von der Wand des Vorformlings absorbiert, so dass sich die Erwärmung gut auf einen bestimmten Wandbereich des Vorformlings konzentrieren lässt.

In einer bevorzugten Ausführungsform weist die Vorrichtung einen oder mehrere Heizstrahler in Form eines Hellstrahlers auf. Der Begriff "*Hellstrahler*" bedeutet einen Heizstrahler, dessen Strahlungsmaximum bei einer Wellenlänge von weniger als 2 µm liegt. Eine derartige Strahlung wird auch als Strahlung im nahen Infrarot (NIR-Strahlung) bezeichnet. Diese Strahlung ist besonders gut geeignet zur Erwärmung von Vorformlingen. Diese Strahler lassen sich aufgrund geringer Trägheit zeitlich besonders genau steuern und ermöglichen eine Anpassung des Bestrahlungsspektrums an unterschiedliche Vorformlingmaterialien und Materialdicken. Durch die vergleichsweise geringe Absorption in der Wand des Vorformlings kann die Hellstrahlung auch einen auf der Rückseite der bestrahlten Wand angeordneten Reflektor zur Rückstrahlung anregen, so dass die Wand des Vorformlings gleichmäßig erwärmt werden kann. Damit werden größere Temperaturunterschiede in der Wand vermieden oder weitestgehend unterdrückt, was für das nachfolgende Streckblasen von Vorteil ist. Derartige als Heizstrahler eingesetzte Hellstrahler sind aus dem Stand der Technik bekannt. Vorzugsweise handelt es sich um hellstrahlende Halogenstrahler, hellstrahlende Leuchtdioden und/oder hellstrahlende Laser.

In einer Ausführungsform liegt das Strahlungsmaximum des oder der Hellstrahler im Bereich von 0,8 µm bis unterhalb 2 µm, weiter bevorzugt im bereich von 0,8 µm bis 1,5 µm.

Es ist prinzipiell möglich, dass die Vorrichtung bzw. das Gehäuse der Vorrichtung mehrere Vorformlinge aufnehmen kann.

In einer bevorzugten Ausführungsform sind das Gehäuse und die darin befindlichen Heizstrahler der Vorrichtung jedoch so ausgestaltet, dass das Gehäuse lediglich einen Vorformling aufnehmen kann und aufnimmt. Dieser Vorformling wird vorzugsweise durch IR-Strahlung, vorzugsweise NIR-Strahlung, aus einem oder mehreren Heizstrahlern, vorzugsweise mehreren Heizstrahlern, erwärmt.

Erfindungsgemäß ist
(c) mindestens ein Heizstrahler zwischen der Innenwand und dem Vorformling angeordnet und von der Innenwand beabstandet; und
(d) die Innenwand umschließt den Vorformling um dessen Längsachse herum.

In einer bevorzugten Ausführungsform der erfindungsgemäßen Vorrichtung sind
(c) alle Heizstrahler zwischen der Innenwand und dem Vorformling angeordnet und von der Innenwand beabstandet; und
(d) die Innenwand umschließt den Vorformling um dessen Längsachse herum.

Der Begriff "*beabstandet*" in Merkmal (c) bedeutet, dass sich mindestens ein Heizstrahler oder die Heizstrahler nicht auf der Oberfläche der Innenwand oder auf der Innenwand des Gehäuses der Vorrichtung befindet oder befinden, sondern von dieser in einem messbaren Abstand angebracht sind.

In einer Ausführungsform ist es daher ausgeschlossen, dass sich der mindestens eine Heizstrahler oder die Heizstrahler auf der Innenwand der Oberfläche oder sich auf der Innenwand befindet oder befinden.

In einer Ausführungsform bedeutet der Begriff "*die Innenwand umschließt den Vorformling um dessen Längsachse herum*" gemäß Merkmal (d), dass Innenwand und Längsachse im Wesentlichen parallel zueinander verlaufen und die Innenwand den Vorformling vollständig umschließt.

In einer Ausführungsform kann das Gehäuse oben oder unten oder oben und unten durch einen Deckel verschlossen sein.

Vorzugsweise wird die Innenwand des Gehäuses so ausgestaltet, dass eine zu starke Erwärmung der Innenwand des Gehäuses verhindert wird. Diese strahlt nämlich dann im Vergleich zur eingestrahlten IR-Strahlung langwelliger, wobei diese Strahlung dann auf der Oberfläche des Vorformlings absorbiert wird und nicht mehr in den Vorformling oder in die Wand des Vorformlings eindringt. Dadurch kann ein relativ großer Temperaturgradient von außen nach innen im Vorformling oder der Wand des Vorformlings entstehen, der das anschließende Streckblasen negativ beeinflussen kann, beispielsweise weil innenliegende Wandbereiche des Vorformlings nicht genügend erwärmt wurden.

In einer Ausführungsform ist eine Isolationsschicht zwischen dem mindestens einen Heizstrahler oder den Heizstrahlern und dem Gehäuse nicht notwendig, weil die Innenwand des Gehäuses vorzugsweise eine hochreflektierende Innenschicht aufweist, welche IR-Strahlung reflektieren kann. Eine hohe Reflektion von IR-Strahlung ist außerdem wegen eines hohen angestrebten Wirkungsgrades der für die Erwärmung verwendeten IR-Strahlung wünschenswert.

Die reflektierende Innenwandung kann eine reflektierende Keramik aufweisen oder aus einer derartigen Keramik bestehen. Ein Beispiel für eine derartige Keramik sind verwebte, reine SiO₂-Fasern, welche amorph sind.

In einer weiteren Ausführungsform kann die Innenwand des Gehäuses eine Oberfläche aufweisen, welche ein poliertes Metall oder polierte Metalle aufweist oder aus solchen Metallen besteht. Diese sind besonders gut geeignet, die verwendete IR-Strahlung, vorzugsweise NIR-Strahlung zu reflektieren. In einer Ausführungsform weist die erfindungsgemäße Vorrichtung eine Innenwand auf, die eine Oberfläche aus poliertem Aluminium, Gold, Silber, oder aus zwei oder mehr davon ausweist.

Silber mit hoher Reflexion, etwa mit einer Reflexion von ca. 98 % der eingestrahlten Strahlung, kann in Form von MIRO®-Silber verwendet werden, einem Produkt der Firma Alanod.

Zur Verstärkung der Reflexionswirkung können innerhalb des Gehäuses auch ein oder mehrere Reflektoren angebracht sein. Diese sind vorzugsweise so angeordnet, dass sie IR-Strahlung, vorzugsweise NIR-Strahlung, auf den Vorformling fokussieren können. Durch die Fokussierung kann die vom Heizstrahler emittierte Strahlung auch auf eine bestimmte Zone des Vorformlings gerichtet werden. Dadurch ist eine gute und genaue Zonenprofilierung der Temperatur möglich.

In einer Ausführungsform ist die Oberfläche der Innenwand der erfindungsgemäßen Vorrichtung so ausgebildet, dass sie IR-Strahlung oder NIR-Strahlung auf den Vorformling fokussieren kann. Vorzugsweise ist dabei die Oberfläche als Reflektor oder als mehrere Reflektoren ausgebildet.

In einer weiteren Ausführungsform ist mindestens ein Reflektor so angebracht, dass er sich zwischen der Innenwand des Gehäuses oder auf der Innenwand des Gehäuses und einem Heizstrahler befindet, wobei reflektierte IR-Strahlung oder NIR-Strahlung auf den Vorformling fokussiert wird.

In einer weiteren Ausführungsform ist mindestens ein Reflektor so angeordnet, dass er sich direkt auf dem Heizstrahler befindet, wobei reflektierte IR-Strahlung, vorzugsweise NIR-Strahlung, auf den Vorformling fokussiert werden kann. Wird beispielsweise ein Heizstrahler verwendet, der eine Heizwendel aufweist, die von einem Glaskörper umgeben ist, kann der Reflektor direkt auf dem Glaskörper angeordnet sein.

In einer Ausführungsform können Reflektoren mit unterschiedlicher Reflektorgeometrie eingesetzt werden.

Erfindungsgemäß sind die Heizstrahler in der Vorrichtung so angeordnet, dass der Vorformling gemäß Merkmal (b) abschnittsweise erwärmt werden kann. Dies hat den Vorteil, dass je nach Anforderung der Vorformling bei Verwendung unterschiedlicher Reflektoren auch mit unterschiedlichen Intensitäten bestrahlt werden kann. Dadurch absorbiert der Vorformling in Richtung seiner Längsachse IR-Strahlung, vorzugsweise NIR-Strahlung, unterschiedlich stark, so dass die Strahlung lokal gezielt absorbiert werden kann. Beispielsweise kann im Kuppenbereich des Vorformlings eine abgeschwächte IR-Strahlung notwendig sein, da dieser Bereich für das Streckblasen oft kälter sein soll als der übrige Bereich des Vorformlings.

In einer Ausführungsform wird die Bestrahlung des Vorformlings mit IR-Strahlung, vorzugsweise NIR-Strahlung, unterschiedlicher Intensität dadurch erreicht, dass die Innenwand mit unterschiedlich reflektierenden Oberflächen ausgestattet ist.

In einer weiteren Ausführungsform wird die Bestrahlung des Vorformlings mit IR-Strahlung, vorzugsweise NIR-Strahlung, unterschiedlicher Intensität dadurch erreicht, dass Heizstrahler unterschiedlicher Intensität in der Vorrichtung angebracht sind, wobei die Anbringungsstellen parallel zur Längsachse des Vorformlings angeordnet sind.

Die Heizstrahler können im Gehäuse in regelmäßigen Abständen voneinander oder auch in unregelmäßigen Abständen angeordnet sein. Sie können ferner auch durch unbeheizte Zonen voneinander getrennt sein.

In einer Ausführungsform weist die erfindungsgemäße Vorrichtung mindestens zwei Heizstrahler auf, vorzugsweise Hellstrahler. Vorzugsweise sind dann die zumindest zwei Heizstrahler so ausgebildet, dass sie
(i) die gleiche Intensität in der IR-Strahlung, vorzugsweise NIR-Strahlung, aufweisen; oder
(ii) eine unterschiedliche Intensität in der IR-Strahlung, vorzugsweise NIR-Strahlung, aufweisen; oder
(iii) keinen Reflektor aufweisen; oder
(iv) ein Heizstrahler einen Reflektor aufweist, und der andere Heizstrahler keinen Reflektor aufweist, oder
(v) beide Heizstrahler einen Reflektor aufweisen.

In einer weiteren Ausführungsform ist die erfindungsgemäße Vorrichtung so ausgestaltet, dass zwischen zwei benachbarten Heizstrahlern Kühlluft eingebracht werden kann, um den erwärmten Vorformling kühlen zu können. Vorzugsweise werden zur Luftkühlung Lufteinströmdüsen in der Vorrichtung derart angebracht, dass sich die Luft genau auf eine definierte Zone des Vorformlings verteilen lässt. Vorzugsweise ist in der Vorrichtung ein Lüftungseinlass zum vorzugsweise exzentrischen Einblasen von Kühlluft in den Vorformling vorgesehen, um die eingeblasene Kühlluft im Wesentlichen an der Innenseite der Vorformlingwand entlang zu leiten. Dadurch kann vermieden werden, dass sich die Innenseite des Vorformlings unverhältnismäßig stark im Vergleich zu einem zentralen Wandbereich bzw. der Außenseite des Vorformlings erwärmt.

In einer Ausführungsform ist in der Vorrichtung mindestens ein Lüftungseingang zum Einleiten eines Kühlluftstroms und ein Lüftungsausgang zum Ausleiten des Luftstroms vorgesehen, um Kühlluft an der Außenseite der Vorformlingwand entlang zu leiten. Dadurch kann vermieden werden, dass sich die Außenseite des Vorformlings unverhältnismäßig stark im Vergleich zu einem zentralen Wandbereich bzw. der Innenseite des Vorformlings erwärmt.

In dieser Ausführungsform weist die erfindungsgemäße Vorrichtung weiter auf:
(vi) eine Öffnung zum Einbringen von Kühlluft, welche den Vorformling nach dem Erwärmen kühlt; oder eine Öffnung zum Einbringen von Kühlluft, welche den Vorformling nach dem Erwärmen kühlt, und eine Öffnung zum Ausleiten der Kühlluft.

Die Öffnungen können jeweils in Form einer Düse vorgesehen sein.

In einer Ausführungsform ist in der erfindungsgemäßen Vorrichtung mindestens ein Temperaturfühler zum Ermitteln einer Innentemperatur vorgesehen.

In dieser Ausführungsform weist die erfindungsgemäße Vorrichtung weiter auf:
(vii) einen Temperaturfühler zum Ermitteln der Temperatur innerhalb des Gehäuses.

Die Vorrichtung kann ferner eine Steuereinheit zum Einstellen der Intensität der Heizstrahler und / oder eines Kühlluftstroms in der Vorrichtung auf Basis der ermittelten Innentemperatur aufweisen. Dadurch kann ein zeitlicher Ablauf der Erwärmung des Vorformlings in der erfindungsgemäßen Vorrichtung eingestellt werden und / oder ein bestimmtes Temperaturniveau in der Vorrichtung eingehalten werden.

In dieser Ausführungsform weist die erfindungsgemäße Vorrichtung auf:
(viii) eine Steuereinheit zum Einstellen der Intensität des mindestens einen Heizstrahler oder der Heizstrahler gemäß Merkmal (c) oder eines Kühlluftstroms in der Vorrichtung auf Basis der ermittelten Innentemperatur gemäß Merkmal (vi) oder (vii) oder (vi) und (vii); oder eine Steuereinheit zum Einstellen der Intensität des mindestens einen Heizstrahler oder der Heizstrahler gemäß Merkmal (c) und eines Kühlluftstroms in der Vorrichtung auf Basis der ermittelten Innentemperatur gemäß Merkmal (vi) oder (vii) oder (vi) und (vii).

Für die erfindungsgemäße Vorrichtung und für die Effizienz des mit der erfindungsgemäßen Vorrichtung durchgeführten Verfahrens ist es außerordentlich günstig, dass die Heizstrahler in verschiedenen Formen ausgestaltet werden können. Dies ist insbesondere vorteilhaft, weil unterschiedlich dimensionierte Hohlkörper zu ihrer Herstellung auch unterschiedlich ausgeformte Heizstrahler benötigen können.

In einer bevorzugten Ausführungsform ist mindestens ein Heizstrahler Ring-förmig ausgebildet. Der Begriff "*Ring-förmig*" bedeutet, dass der Heizstrahler den Vorformling um dessen Längsachse herum zumindest teilweise umschließen kann. Der Begriff *"Ring-förmig*" bedeutet somit, dass der Ring nicht durchgehend geschlossen sein muss, sondern er auch an einer Stelle geöffnet sein kann.

In einer Ausführungsform bedeutet der Begriff "*Ring-förmig*", dass der Heizstrahler den Vorformling um dessen Längsachse herum so umschließt, dass ein Umfang des Vorformlings zu mindestens 70 %, vorzugsweise zu mindestens 80 %, weiter bevorzugt zu mindestens 90 % vom Heizstrahler umschlossen ist.

In einer weiteren bevorzugten Ausführungsform ist ein Heizstrahler U-förmig ausgebildet, um den Vorformling um dessen Längsachse herum teilweise umschließen zu können.

Der Begriff "*U-förmig*" bedeutet, dass der Heizstrahler einen halbkreisförmigen Abschnitt aufweist, an dessen Enden sich jeweils ein linearer Abschnitt anschließt.

In einer Ausführungsform bedeutet der Begriff "*U-förmig*", dass der Heizstrahler den Vorformling um dessen Längsachse herum so umschließt, dass ein Umfang des Vorformlings zu mindestens 30 %, vorzugsweise zu mindestens 40 %, weiter bevorzugt zu maximal etwa 50 % vom Heizstrahler umschlossen ist.

In einer weiteren Ausführungsform wird ein Heizstrahler in Form von zwei voneinander getrennten C-förmigen Einheiten ausgebildet, um den Vorformling um dessen Längsachse herum teilweise umschließen zu können.

In einer Ausführungsform bedeutet der Begriff "*C-förmig*", dass eine C-Einheit des Heizstrahlers den Vorformling um dessen längsachte herum so umschließt, dass ein umfang des Vorformlings zu mindestens 10 %, vorzugsweise zu mindestens 20 %, weiter bevorzugt zu mindestens 30 %, maximal aber zu etwa 50 % von einer C-Einheit des Heizstrahlers umschlossen ist.

Der Begriff "*zwei voneinander getrennte C-förmige Einheiten*" bedeutet somit einen Heizstrahler, der aus zwei halbkreisförmigen Einheiten besteht, welche jeweils als Heizstrahler ausgebildet sind, deren Enden aufeinander gerichtet sind, die aber voneinander getrennt werden können. Diese C-förmigen Einheiten sind jeweils vorzugsweise als Hellstrahler ausgestaltet. Sie können mit gleicher Heizleistung aber auch unterschiedlicher Heizleistung betrieben werden.

In einer weiteren Ausführungsform kann ein Heizstrahler linear ausgebildet sein.

Die erfindungsgemäße Vorrichtung kann entweder eine der genannten Formen des Heizstrahlers oder auch mehrere dieser Formen aufweisen.

In einer Ausführungsform werden als Heizstrahler ausschließlich Ring-förmige Heizstrahler eingesetzt.

In einer weiteren Ausführungsform werden als Heizstrahler ausschließlich U-förmige Heizstrahler eingesetzt.

In einer weiteren Ausführungsform werden als Heizstrahler Ring-förmige und U-förmige Heizstrahler eingesetzt.

In einer weiteren Ausführungsform werden als Heizstrahler ausschließlich Heizstrahler eingesetzt, welche zwei voneinander getrennte C-förmige Einheiten aufweisen.

In einer Ausführungsform werden als Heizstrahler ausschließlich linear ausgebildete Heizstrahler eingesetzt.

In der Ausführungsform des Ring-förmigen Heizstrahlers, des U-förmigen Heizstrahlers oder des Heizstrahlers, welcher zwei voneinander getrennte C-förmige Einheiten aufweist, ist die Innenwand des Gehäuses vorzugsweise so ausgebildet, dass sie sich der Form der Heizstrahler anpassen kann. Demzufolge kann die Innenwand des Gehäuses Ring-förmig oder auch U-förmig ausgebildet sein.

Bei Verwendung Ring-förmiger oder U-förmiger Heizstrahler oder Ring-förmiger und U-förmiger Heizstrahler ist die Vorrichtung vorzugsweise so ausgestaltet, dass ihr Gehäuse so geöffnet werden kann oder so ausgestaltet ist, dass der erwärmte Vorformling in Richtung parallel zu seiner Längsachse aus dem Heizstrahler und somit aus dem Gehäuse bzw. der Vorrichtung entnommen werden kann. In einer Ausführungsform ist beispielsweise das Gehäuse durch einen Deckel verschlossen, vorzugsweise auf der Ober- oder Unterseite, der nach dem Erwärmen entfernt wird, wobei der Vorformling entlang seiner Längsachse aus dem Gehäuse durch die gebildete Öffnung entnommen werden kann. Bei Verwendung U-förmiger Heizstrahler kann die Vorrichtung in einer weiteren Ausführungsform vorzugsweise auch so ausgestaltet sein, dass ihr Gehäuse so geöffnet werden kann oder dieses so ausgestaltet ist, dass der erwärmte Vorformling in Richtung quer zu seiner Längsachse aus dem Heizstrahler in Richtung des geöffneten Teiles des U-Förmigen Heizstrahlers und somit aus dem Gehäuse bzw. der Vorrichtung entnommen werden kann. In einer Ausführungsform ist das Gehäuse durch einen seitlich angebrachten Deckel verschlossen, der nach dem Erwärmen entfernt wird, wobei der Verformling quer zu seiner Längsachse aus dem Gehäuse und dem U-förmigen Heizstrahler durch die gebildete Öffnung entnommen werden kann.

Diese Ausführungsform kann vorzugsweise dann verwendet werden, wenn relativ große Vorformlinge verwendet werden oder Vorformlinge hergestellt werden sollen, welche von der Flaschengeometrie abweichen.

In der Ausführungsform des Heizstrahlers, welcher zwei voneinander getrennte C-förmige Einheiten aufweist, und in der Ausführungsform des linearen Heizstrahlers ist die Vorrichtung vorzugsweise so ausgestaltet, dass das Gehäuse so geöffnet werden kann oder ist dieses so ausgestaltet, dass der erwärmte Vorformling in Richtung quer zu seiner Längsachse, d.h. in Richtung seiner Querachse, aus dem Gehäuse entnommen werden kann.

In der Ausführungsform des Heizstrahlers, welcher zwei voneinander getrennte C-förmige Einheiten aufweist, und in der Ausführungsform des linearen Heizstrahlers sind die Heizstrahler im Gehäuse vorzugsweise so angeordnet, dass das Gehäuse parallel zur Längsachse des Vorformlings geöffnet werden kann, vorzugsweise durch Aufklappen entlang einer Achse in der Gehäusewand, die vorzugsweise als Scharnier ausgebildet ist. Der erwärmte Vorformling kann dann in einer Richtung quer zu seiner Längsachse, d.h. in Richtung seiner Querachse, aus dem Gehäuse entnommen werden.

Diese Ausführungsform kann vorzugsweise dann verwendet werden, wenn relativ große Vorformlinge verwendet werden oder Vorformlinge hergestellt werden sollen, welche von der Flaschengeometrie abweichen.

Ein Vorteil der erfindungsgemäßen Vorrichtung besteht darin, dass sie es erlaubt, einen Vorformling flexibel zu erwärmen, weil sie eine sehr gute Temperaturprofilierung ermöglicht, wobei nur geringe Energieverluste entstehen. Außerdem kann die Vorrichtung auf Grund ihres modularen Aufbaus und ihrer unterschiedlichen Ausbildungsformen der Heizstrahler an unterschiedlichste Geometrien des Vorformlings angepasst werden.

Gemäß eines ***zweiten Aspekts*** betrifft die Erfindung ein Verfahren zur Herstellung eines Hohlkörpers, vorzugsweise einer Flasche, aus Kunststoff, vorzugsweise PET, in Form eines Vorformlings mit einer Längsachse,
dadurch gekennzeichnet, dass
es mindestens die Stufen (I) und (II) aufweist:
(I) Erwärmen des Kunststoffs in einer Vorrichtung wie im *ersten Aspekt* oder einer der Ausführungsformen des ***ersten Aspekts*** definiert;
(II) Überführen des erwärmten Kunststoffs der Stufe (I) in eine Blasform, vorzugsweise eine Streckblasform, und Streckblasen in Richtung parallel zur Längsachse des Vorformlings.

Die erfindungsgemäße Vorrichtung erlaubt es vorteilhafter Weise, das erfindungsgemäße Verfahren so durchzuführen zu können, dass die Oberfläche des Vorformlings gezielt überhitzt werden kann, d.h. eine Innentemperatur in der Wand des Vorformlings eingestellt werden kann, welche hoch genug ist, beim Verstrecken die Entstehung von sogenanntem Weißbruch zu unterdrücken. Dieser Weißbruch beruht auf Mikrorissen in der Wand des Vorformlings. Ein derartiger Weißbruch entsteht vorzugsweise beim Verstrecken von zu kaltem PET- Material.

Im Anschluss an das Erwärmen gemäß Stufe (I) wird die überhitzte Vorform sehr schnell der Blasform gemäß Stufe (II) zugeführt, damit keine Rekristallisation auftreten kann. Eine Rekristallisation ist ungünstig, da dadurch die Flasche durch Streuen des Lichts an Kristallen eine weiße Einfärbung erhält.

Gemäß eines ***dritten Aspekts*** betrifft die Erfindung einen Apparat zur Herstellung von Hohlkörpern, vorzugsweise von Flaschen, aus Kunststoff, vorzugsweise PET,
dadurch gekennzeichnet, dass
der Apparat eine Vielzahl von Vorrichtungen aufweist wie im ***ersten Aspekt*** oder einer der Ausführungsformen des ***ersten Aspekts*** definiert.

In einer Ausführungsform weist der erfindungsgemäße Apparat eine Vielzahl von Vorrichtungen auf wie im ***ersten Aspekt*** oder einer der Ausführungsformen des ***ersten Aspekts*** definiert, wobei jede dieser Vorrichtung Heizstrahler aufweist ausgewählt aus Ring-förmigen Heizstrahlern, U-förmigen Heizstrahlern, linearen Heizstrahlern oder Heizstrahlern, welche zwei voneinander getrennte C-förmige Einheiten aufweisen, oder Kombinationen von zwei oder mehreren davon.

In einer weiteren Ausführungsform weist der erfindungsgemäße Apparat eine Vielzahl von Vorrichtungen auf wie im ***ersten Aspekt*** oder einer der Ausführungsformen des **ers*ten Aspekts*** definiert, wobei jede dieser Vorrichtung Heizstrahler aufweist ausgewählt aus U-förmigen Heizstrahlern, linearen Heizstrahlern oder Heizstrahlern, welche zwei voneinander getrennte C-förmige Einheiten aufweisen, oder Kombinationen von zwei oder mehreren davon.

Vorzugsweise sind dann die erfindungsgemäßen Vorrichtungen im Apparat hintereinander so angeordnet, dass sie linear angeordnet sind.

In einer weiteren Ausführungsform weist der erfindungsgemäße Apparat eine Vielzahl von Vorrichtungen auf wie im ***ersten Aspekt*** oder einer der Ausführungsformen des **ers*ten Aspekts*** definiert, wobei jede dieser Vorrichtung Ring-förmige Heizstrahler aufweist. Vorzugsweise sind dann die Vorrichtungen im Apparat hintereinander so angeordnet, dass sie kreisförmig angeordnet sind.

Der erfindungsgemäße Apparat weist auch mindestens eine Blasform, vorzugsweise eine Streckblasform, auf. Darin kann der erwärmte Vorformling in Richtung entlang zu seiner Längsachse dem Streckblasen unterzogen wird.

In den Figuren zeigt
- **Figur 1**: eine schematische Seitenansicht eines Vorformlings.
- **Figur 2**: eine schematische Seitenansicht einer erfindungsgemäßen Vorrichtung gemäß des ***ersten Aspekts.***
- **Figur 3**: einen Ring-förmigen Heizstrahler in der Draufsicht in der Vorrichtung der Figur **2****.**
- **Figur 4**: eine Seitenansicht einer Heizzone der Vorrichtung der **Figur 2****,** welche mit einem Reflektor oder Reflektoren ausgestattet ist.
- **Figur 5**: eine Seitenansicht einer Heizzone der Vorrichtung der **Figur 2****,** welche mit einem Reflektor oder Reflektoren ausgestattet ist.
- **Figur 6**: eine Seitenansicht zweier Heizzonen der Vorrichtung der **Figur 2****,** welche mit Reflektoren gemäß **Figur 3** und **Figur 4** ausgestattet sind.
- **Figur 7**: eine Seitenansicht der Heizzonen der Vorrichtung der **Figur 6** mit Kühlluft.
- **Figur 8**: eine erfindungsgemäße Vorrichtung gemäß des ***ersten Aspekts**,* die geöffnet werden kann.

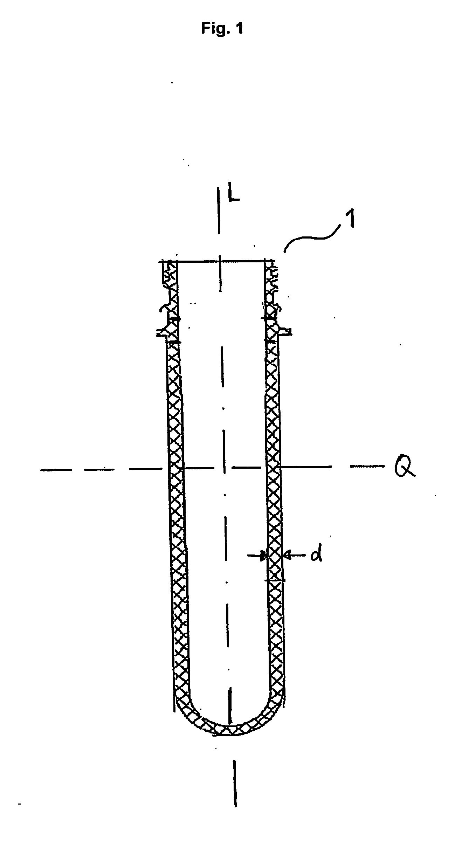

**Figur 1** zeigt eine schematische Seitenansicht eines Vorformlings 1, wie er typischerweise zur Herstellung von PET-Flaschen, beispielsweise von PET-Getränkeflaschen mit einem Inhalt von 1,5 I, verwendet wird. Seine Länge entlang der Längsachse L kann beispielsweise ca. 134 mm, sein äußerer Durchmesser entlang der Querachse Q ca. 27 mm und seine Wanddicke d ca. 2,8 mm betragen. Die Wand des Vorformling 1 der Dicke d wird in einer erfindungsgemäßen Vorrichtung mit IR-Strahlung erhitzt, vorzugsweise mit NIR-Strahlung. Der erhitzte Vorformling wird dann in eine Streckblasform überführt (nicht gezeigt), dort entlang seiner Längsachse L gestreckt und sein Umfang in Richtung der Achse Q vergrößert.

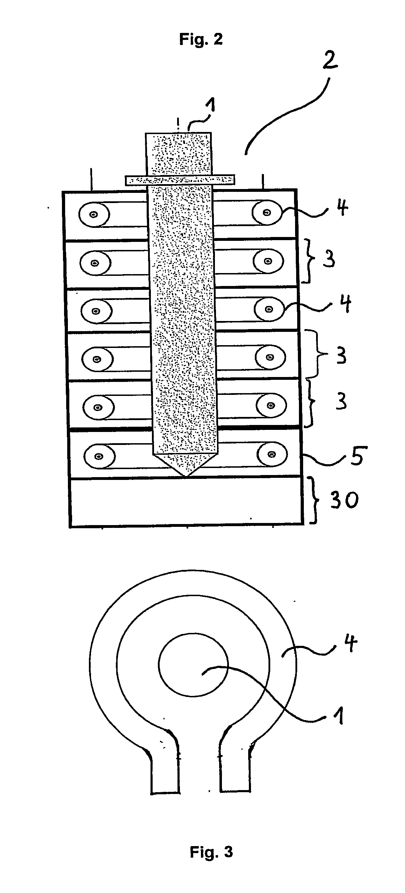

**Figur 2** zeigt eine schematische Seitenansicht einer Ausführungsform einer erfindungsgemäßen Vorrichtung 2. Sie enthält einen Vorformling 1, der erfindungsgemäß erwärmt werden soll. Die Vorrichtung 2 weist mehrere Heizzonen 3 auf, die unterschiedlich aber auch gleich gestaltet sein können. Jede Heizzone 3 enthält einen Heizstrahler 4. Der Heizstrahler 4 ist so angeordnet, dass er von der Oberfläche der Innenwand des Gehäuses 5 der Vorrichtung 2 beabstandet ist. In der Ausführungsform der **Figur 2** ist der Heizstrahler 4 Ring-förmig, wie in **Figur 3** angedeutet (elektrische Zuleitungen zum Heizstrahler sind nicht gezeigt). Die Heizzonen 3 der Vorrichtung 2 können vorzugsweise unabhängig voneinander über eine Steuereinheit (nicht gezeigt) betrieben werden, so dass der Vorformling 2 abschnittsweise unterschiedlich stark erwärmt werden kann. Selbstverständlich kann er jedoch auch abschnittsweise gleichmäßig stark erwärmt werden. Die Vorrichtung kann auch eine oder mehrere Zonen 30 aufweisen, die keinen Heizstrahler aufweisen. Diese Zonen 30 können in der Vorrichtung beliebig angeordnet sein. Die Innenwand des Gehäuses 5 bzw. die Oberfläche der Innenwand des Gehäuses 5 umschließt den Vorformling 1 um dessen Längsachse herum. Diese Innenwand ist in Figur 3 nicht gezeigt.

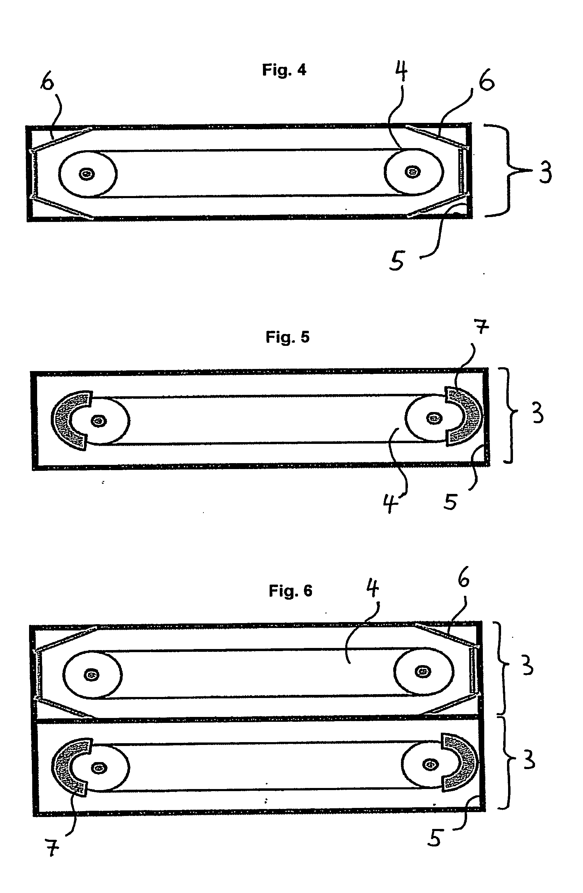

**Figur 4** zeigt eine Seitenansicht einer Heizzone 3 der Vorrichtung 2, welche mit einem Reflektor 6 ausgestattet ist. Der Reflektor 6 befindet sich dabei zwischen dem Heizstrahler 4 und der Oberfläche der Innenwand des Gehäuses 5 der Vorrichtung 2. In der Anordnung der **Figur 4** sind zwei Reflektoren 6 angeordnet, die einander gegenüberliegen. Der Reflektor 6 kann so ausgerichtet werden, dass die vom Heizstrahler emittierte Strahlung, vorzugsweise die NIR-Strahlung eines Hellstrahlers, auch auf eine bestimmte Zone des Vorformlings 1 (nicht gezeigt) fokussiert werden kann.

**Figur 5** zeigt eine Seitenansicht einer Heizzone 3 der Vorrichtung 2, welche mit einem Reflektor 7 ausgestattet ist. Der Reflektor 7 ist dabei direkt auf dem Heizstrahler 4 angebracht, beispielsweise auf dem Glaskörper des Heizstrahlers 4. In der Anordnung der **Figur 5** sind zwei Reflektoren 7 angeordnet, die einander gegenüberliegen. Der Reflektor 7 kann so ausgerichtet werden, dass die vom Heizstrahler emittierte Strahlung, vorzugsweise die NIR-Strahlung eines Hellstrahlers, auf eine bestimmte Zone des Vorformlings 1 (nicht gezeigt) fokussiert werden kann.

**Figur 6** zeigt eine Seitenansicht zweier unterschiedlich ausgestalteter Heizzonen 3 der Vorrichtung 2, welche mit Reflektoren 6 und 7 ausgestattet sind.

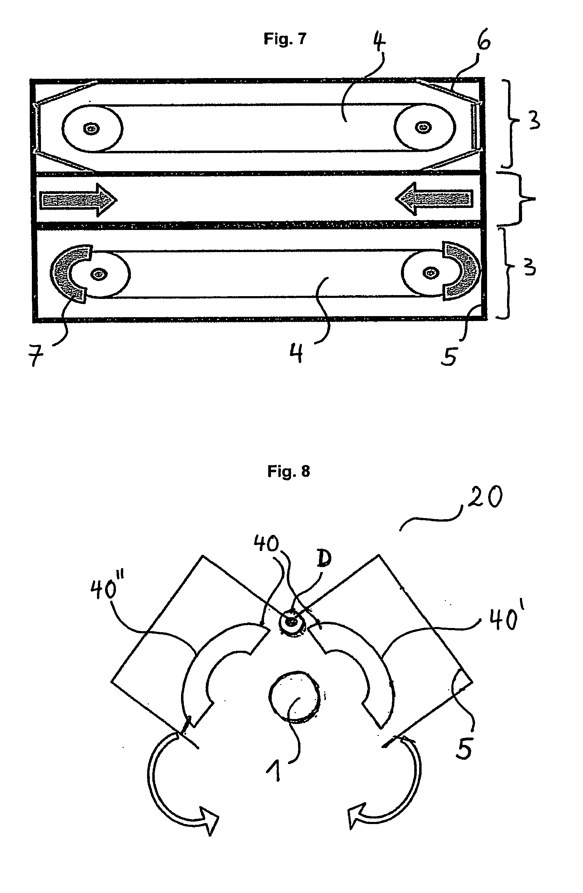

**Figur 7** zeigt eine Seitenansicht der Heizzonen 3 der Vorrichtung nach **Figur 6****,** wobei zwischen den Heizzonen Kühlluft eingeblasen werden kann (durch die Pfeile symbolisiert), die senkrecht auf den Vorformling 1 (nicht gezeigt) trifft und diesen nach Erwärmung auf eine gewünschte Temperatur kühlen kann. Die Temperatur kann dabei über einen Temperaturfühler kontrolliert werden (nicht gezeigt).

**Figur 8** zeigt eine weitere erfindungsgemäße Vorrichtung 20, welche einen Heizstrahler 40 aufweist. Dieser Heizstrahler 40 ist so ausgestaltet, dass er zwei voneinander getrennte C-förmige Einheiten 40' und 40" aufweist. Diese Einheiten sind jeweils vorzugsweise als Hellstrahler ausgestaltet. Sie können mit gleicher Heizleistung aber auch unterschiedlicher Heizleistung betrieben werden. Sie sind von der Oberfläche der Innenwand des Gehäuses 5 beabstandet. Nach Erwärmen des Vorformlings 1 kann die Vorrichtung 20 entlang einer Drehachse D, die beispielsweise als Scharnier ausgestaltet ist, aufgeklappt und der erwärmte Vorformling 1 aus der Vorrichtung 20 quer zu seiner Längsachse, also in Richtung seiner Querachse, entnommen werden. Nach Aufnahme eines neuen Vorformlings kann das Gehäuse wieder geschlossen werden, wie durch die Pfeile angedeutet.

### Bezugszeichenliste:

- 1: Vorformling (Preform)
- L: Längsachse des Vorformlings 1
- Q: Querachse des Vorformlings 1
- d: Dicke der Wand des Vorformlings 1
- 2: Vorrichtung zum Erwärmen von Kunststoff
- 3: Heizzone
- 4: Ring-förmiger Heizstrahler
- 5: Innenwand oder Oberfläche der Innenwand des Gehäuses der Vorrichtung 2
- 6: Reflektor
- 7: Reflektor
- 20: Vorrichtung zum Erwärmen von Kunststoff
- 40: Heizstrahler mit zwei voneinander getrennten C-förmigen Einheiten
- 40': C-förmige Heizeinheit des Heizstrahlers 40
- 40": C-förmige Heizeinheit des Heizstrahlers 40
- D: Drehachse zum Öffnen der Vorrichtung 20

## Patentansprüche

1. Vorrichtung zum Erwärmen von Kunststoff, vorzugsweise PET, wobei der Kunststoff in Form eines Vorformlings vorliegt, der eine Längsachse aufweist, und aus dem ein Hohlkörper, vorzugsweise eine Flasche, hergestellt werden kann, insbesondere durch Streckblasen, mindestens aufweisend:
(a) ein Gehäuse, welches eine Innenwand aufweist, die so ausgebildet ist, dass sie IR-Strahlung, vorzugsweise NIR-Strahlung, reflektieren kann; und
(b) mehrere im Gehäuse angeordnete Heizstrahler zum Bestrahlen des Vorformlings mit IR-Strahlung, vorzugsweise NIR-Strahlung, wobei die Heizstrahler so im Gehäuse angeordnet sind, dass sich der Vorformling in Richtung der Längsachse durch die Heizstrahler abschnittsweise erwärmen lässt,
**dadurch gekennzeichnet, dass**
(c) mindestens ein Heizstrahler zwischen der Innenwand und dem Vorformling angeordnet ist und von der Innenwand beabstandet ist; und
(d) die Innenwand des Gehäuses den Vorformling um dessen Längsachse herum umschließt.

2. Vorrichtung nach Anspruch 1, wobei die Innenwand eine Oberfläche aus verwebten Siliziumdioxidfasern, poliertem Aluminium, Gold, Silber, oder aus zwei oder mehr davon aufweist.

3. Vorrichtung nach Anspruch 1 oder 2, wobei die Oberfläche als Reflektor ausgebildet ist, welcher IR-Strahlung auf den Vorformling fokussieren kann.

4. Vorrichtung nach einem der vorstehenden Ansprüche, wobei zumindest ein Heizstrahler mit einem Reflektor ausgestattet ist, welcher IR-Strahlung auf den Vorformling fokussieren kann.

5. Vorrichtung nach einem der vorstehenden Ansprüche, wobei zumindest zwei Heizstrahler so ausgebildet sind, dass sie
(i) die gleiche Intensität in der IR-Strahlung aufweisen; oder
(ii) eine unterschiedliche Intensität in der IR-Strahlung aufweisen; oder
(iii) keinen Reflektor aufweisen; oder
(iv) ein Heizstrahler einen Reflektor aufweist, und der andere Heizstrahler keinen Reflektor aufweist, oder
(v) beide Heizstrahler einen Reflektor aufweisen.

6. Vorrichtung nach einem der vorstehenden Ansprüche, wobei zwischen zwei benachbarten Heizstrahlern Kühlluft eingebracht werden kann, um den erwärmten Vorformling kühlen zu können.

7. Vorrichtung nach einem der vorstehenden Ansprüche, wobei ein Heizstrahler Ring-förmig ausgebildet ist, um den Vorformling um dessen Längsachse herum zumindest teilweise umschließen zu können.

8. Vorrichtung nach einem der Ansprüche 1 bis 6, wobei ein Heizstrahler U-förmig ausgebildet ist, um den Vorformling um dessen Längsachse herum teilweise umschließen zu können.

9. Vorrichtung nach Anspruch 7 oder 8, wobei das Gehäuse so geöffnet werden kann oder so ausgestaltet ist, dass der erwärmte Vorformling in Richtung parallel zu seiner Längsachse aus dem Gehäuse entnommen werden kann.

10. Vorrichtung nach einem der Ansprüche 1 bis 6, wobei ein Heizstrahler zwei voneinander getrennte C-förmig ausgebildete Einheiten aufweist, welche angeordnet sind, um den Vorformling um dessen Längsachse herum zumindest teilweise umschließen zu können.

11. Vorrichtung nach einem der Ansprüche 7 bis 10, wobei die Innenwand des Gehäuses so ausgebildet ist, dass sie sich der Form der Heizstrahler anpasst.

12. Vorrichtung nach einem der Ansprüche 1 bis 6, wobei ein Heizstrahler linear ausgebildet ist.

13. Vorrichtung nach Anspruch 8, 10 oder 12, wobei das Gehäuse so geöffnet werden kann oder so ausgestaltet ist, dass der erwärmte Vorformling in Richtung quer zu seiner Längsachse aus dem Gehäuse entnommen werden kann.

14. Verfahren zur Herstellung eines Hohlkörpers, vorzugsweise einer Flasche, aus Kunststoff, vorzugsweise PET, in Form eines Vorformlings mit einer Längsachse,
**dadurch gekennzeichnet, dass**
es mindestens die Stufen (I) und (II) aufweist:
(I) Erwärmen des Kunststoffs in einer Vorrichtung wie in einem der Ansprüche 1 bis 13 definiert;
(II) Überführen des erwärmten Kunststoffs der Stufe (I) in eine Blasform und Streckblasen in Richtung parallel zur Längsachse des Vorformlings.

15. Apparat zur Herstellung von Hohlkörpern, vorzugsweise von Flaschen, aus Kunststoff, vorzugsweise PET,
**dadurch gekennzeichnet, dass**
der Apparat eine Vielzahl von Vorrichtungen aufweist wie in einem der Ansprüche 1 bis 13 definiert.
